# FASCICULE DE BREVET EUROPEEN

(11) **EP 4 519 126 B1**
(45) Date de publication et mention de la délivrance du brevet: **28.01.2026**
(21) Numéro de dépôt: 23719438.6
(22) Date de dépôt: 28.03.2023
(51) Int. Cl.: B60R 19/24

(54) **PEAU DE PARE-CHOCS À DÉFORMATIONS LATÉRALES CONTRÔLÉES, POUR UN VÉHICULE TERRESTRE**
STOSSFÄNGERVERKLEIDUNG MIT GESTEUERTEN SEITLICHEN VERFORMUNGEN FÜR EIN LANDFAHRZEUG
BUMPER SKIN WITH CONTROLLED LATERAL DEFORMATIONS FOR A LAND VEHICLE

(30) Priorité: 03.05.2022 FR 2204193
(43) Date de publication de la demande: 12.03.2025
(73) Titulaire: Stellantis Auto SAS, 78300 Poissy (FR)
(72) Inventeur: VIDEIRA, Filipe, 78140 VELIZY VILLACOUBLAY (FR); BOUDAN, Julien, 91210 DRAVEIL (FR)
(74) Mandataire: BCIP
(86) Numéro de dépôt international: PCT/FR2023/050438
(87) Numéro de publication internationale: WO 2023/214136

(56) Documents cités:
- DE-A1- 10 314 021
- DE-A1- 102008 020 539
- FR-A1- 2 816 577
- GB-A- 2 222 556
- JP-A- S58 177 780
- US-A1- 2018 194 311

## Description

### Domaine technique de l'invention

La présente invention revendique la priorité de la demande française 2204193 déposée le 03 mai 2022**.**

L'invention concerne les véhicules terrestres, et plus précisément les pare-chocs (ou boucliers) de tels véhicules.

### Etat de la technique

Certains véhicules terrestres, généralement de type automobile, comprennent une structure à laquelle sont solidarisés des ailes de carrosserie droite et gauche et au moins un pare-chocs (ou bouclier).

Il est rappelé qu'un pare-chocs de véhicule terrestre comprend généralement une armature de pare-chocs, une éventuelle traverse inférieure de pare-chocs, une peau de pare-chocs solidarisée fixement à l'armature de pare-chocs et à l'éventuelle traverse inférieure de pare-chocs et masquant notamment ces dernières, et une éventuelle doublure de pare-chocs solidarisée fixement à la face interne de la peau de pare-chocs.

Dans certains véhicules terrestres, la peau de pare-chocs comporte un bord supérieur qui est installé suivant la direction transversale du véhicule et comprend deux parties d'extrémité droite et gauche qui sont prolongées vers le bas par deux bords arrière installés chacun devant un bord avant d'une aile (de carrosserie) correspondante. Généralement, lorsque la peau de pare-chocs subit un choc sensiblement frontal, elle est suffisamment souple pour se déformer à l'endroit de l'impact, et donc elle ne risque généralement pas d'occasionner des dommages à l'une au moins des ailes (de carrosserie). Mais, lorsque des blocs optiques relativement massifs sont intégrés dans la peau de pare-chocs et solidarisés fixement à cette dernière ou à la doublure de parechoc, il se crée deux zones très rigides là où les blocs optiques sont intégrés. Par conséquent, lorsque la peau de pare-chocs subit un choc sensiblement frontal l'un au moins de ses bords arrière exerce une pression sur le bord avant de l'aile correspondante du fait de cette grande rigidité combinée au fait que ce bord avant est sensiblement dans l'axe de la direction du choc, et donc cette aile est poussée vers l'arrière et déformée. Il en résulte un surcoût important de la réparation du véhicule du fait que l'on doit remplacer non seulement le pare-chocs mais aussi chaque aile endommagée. Cette situation est notablement aggravée lorsque l'intensité du choc est importante, typiquement lorsque la vitesse relative du véhicule par rapport à l'objet contacté est supérieure à 10 km/h. En effet, dans ce cas l'aile poussée et déformée va à son tour exercer une pression sur la porte latérale située dans son prolongement, ce qui la pousse vers l'arrière et la déforme. Il en résulte un surcoût encore plus important de la réparation du véhicule du fait que l'on devra remplacer non seulement le pare-chocs et chaque aile endommagée mais aussi chaque porte latérale endommagée.

Il a certes été proposé de réaliser des zones de fusibilité au niveau des fixations des blocs optiques (ou feux) sur le pare-chocs et/ou des fixations du pare-chocs sur les ailes, mais la mise au point de ces zones de fusibilité est difficile et donc onéreuse et chronophage.

L'invention a donc notamment pour but d'améliorer la situation.

### Présentation de l'invention

Elle propose notamment à cet effet une peau de pare-chocs, d'une part, propre à équiper un véhicule terrestre comportant deux ailes droite et gauche comportant chacune un bord avant, et, d'autre part, comportant un bord supérieur propre à être installé suivant une direction transversale du véhicule et ayant deux parties d'extrémité droite et gauche prolongées vers le bas par deux bords arrière propres à être installés chacun devant un bord avant correspondant.

Cette peau de pare-chocs se caractérise par le fait que chaque partie d'extrémité comprend une zone qui est agencée de manière à induire une déformation locale de la peau de pare-chocs suivant une direction prédéfinie, en cas de choc sensiblement frontal subi par cette dernière.

Grâce à cette déformation contrôlée de la peau de pare-chocs lors d'un choc sensiblement frontal, on évite totalement ou presque totalement à l'un au moins de ses bords arrière d'exercer une pression sur le bord avant de l'aile correspondante, y compris en présence de zones très rigides, ce qui permet de réduire les coûts de réparation du véhicule.

Selon l'invention:
- chaque zone est agencée de manière à induire une déformation locale de la peau de pare-chocs suivant une direction prédéfinie parallèle à la direction transversale, en cas de choc sensiblement frontal ;
- chaque zone a une épaisseur qui est inférieure à une épaisseur locale de sa partie d'extrémité ; chaque zone a une forme générale en V. La peau de pare-chocs selon l'invention peut comporter d'autres caractéristiques qui peuvent être prises séparément ou en combinaison, et notamment:
- en présence de la dernière sous-option, chaque zone peut être propre à s'étendre sensiblement suivant une direction verticale du véhicule, avec la sous-partie la plus étroite du V placée à un niveau vertical inférieur à un niveau où est placée la sous-partie la plus large du V ;
- chaque partie d'extrémité peut être propre à s'étendre en direction du bord avant correspondant.

L'invention propose également un pare-chocs, d'une part, destiné à équiper un véhicule terrestre comprenant deux ailes droite et gauche comportant chacune un bord avant, et, d'autre part, comprenant une peau de pare-chocs du type de celle présentée ci-avant.

L'invention propose également un véhicule terrestre, éventuellement de type automobile, et comprenant deux ailes droite et gauche comportant chacune un bord avant et au moins un pare-chocs du type de celui présenté ci-avant.

Par exemple, ce véhicule terrestre peut comprendre une partie avant qui comporte le pare-chocs.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig.1] illustre schématiquement, dans une vue en perspective du côté de la face externe, une partie gauche d'un exemple de réalisation d'une peau de pare-chocs selon l'invention, intégrant un feu avant gauche, avec une aile gauche installée dans le prolongement de son bord arrière et un projecteur avant gauche installé au-dessus de son bord supérieur,
[Fig.2] illustre schématiquement, dans une vue en perspective du côté de la face externe, une petite partie de la peau de pare-chocs de la figure 1, en l'absence de l'aile gauche et du projecteur avant gauche,
[Fig.3] illustre schématiquement, dans une vue en perspective du côté de la face interne, la peau de pare-chocs de la figure 1, en l'absence de l'aile gauche et du projecteur avant gauche, mais en présence d'une doublure de pare-chocs et du feu avant gauche, et
[Fig.4] illustre schématiquement, dans une vue en perspective du côté de la face interne, la partie d'extrémité gauche du bord supérieur de la peau de pare-chocs de la figure 1, en l'absence de l'aile gauche et du projecteur avant gauche.

### Description détaillée de l'invention

L'invention a notamment pour but de proposer une peau de pare-chocs PP destinée à équiper un véhicule terrestre et faisant l'objet de déformations latérales contrôlées lorsqu'elle subit un choc sensiblement frontal.

Dans ce qui suit, on considère, à titre d'exemple non limitatif, que la peau de pare-chocs PP est destinée à faire partie d'un véhicule terrestre de type automobile, comme par exemple une voiture. Mais l'invention n'est pas limitée à ce type de véhicule terrestre. En effet, la peau de pare-chocs PP selon l'invention peut équiper n'importe quel véhicule terrestre comprenant une structure à laquelle sont solidarisés au moins une peau de pare-chocs et des ailes de carrosserie droite et gauche.

Par ailleurs, on considère dans ce qui suit, à titre d'exemple non limitatif, que la peau de pare-chocs PP est destinée à faire partie de la partie avant (et plus précisément la façade avant) d'un véhicule terrestre (ici un véhicule automobile). Mais cela n'est pas obligatoire. En effet, une peau de pare-chocs PP selon l'invention pourrait faire partie d'une partie arrière d'un véhicule terrestre.

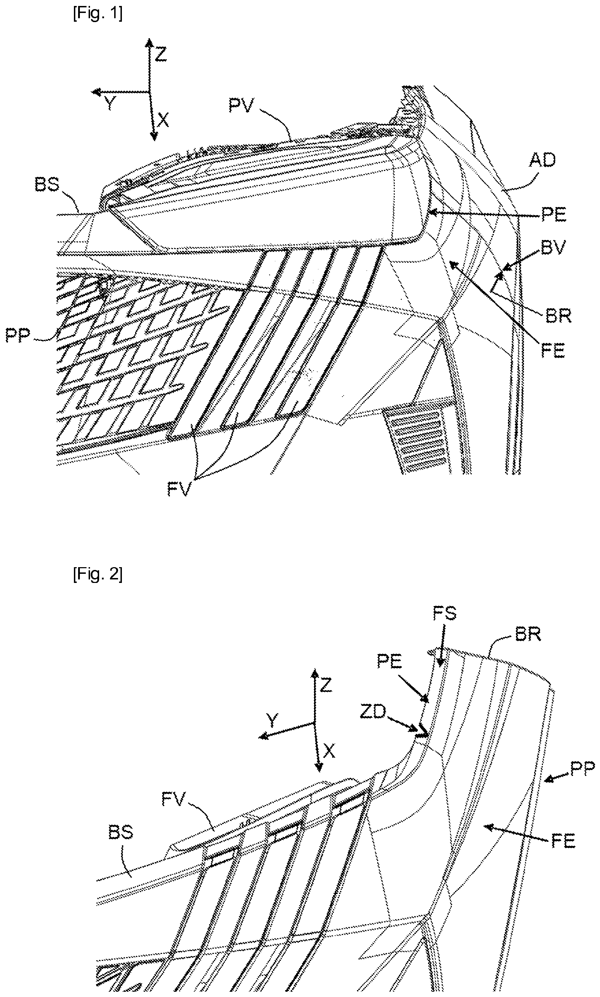

Sur les figures 1 à 4 la direction X est la direction longitudinale du véhicule, laquelle est parallèle aux côtés latéraux comportant les portes latérales, la direction Y est la direction transversale du véhicule, laquelle est perpendiculaire à la direction longitudinale X, et la direction Z est la direction verticale du véhicule, laquelle est perpendiculaire aux directions longitudinale X et transversale Y.

Dans ce qui suit et ce qui précède les notions d'avant et d'arrière s'entendent par rapport à la direction longitudinale X du véhicule (parallèle aux côtés latéraux comportant les portes latérales). Par conséquent, une partie ou face avant d'un élément est orientée vers l'extrémité avant du véhicule tandis que la partie ou face arrière de ce même élément est orientée vers l'arrière du véhicule et donc opposée à la partie ou face avant.

On a schématiquement illustré sur la figure 1 une partie gauche d'un exemple de réalisation d'une peau de pare-chocs PP selon l'invention, destinée à faire partie d'un véhicule terrestre.

Bien que cela n'apparaisse pas sur la figure 1, le véhicule terrestre comprend une structure à laquelle sont solidarisées la peau de pare-chocs PP et des ailes (ici avant) gauche AG et droite. La peau de pare-chocs PP est plus précisément solidarisée fixement, notamment, à au moins une traverse de la façade avant du véhicule (dont elle fait partie).

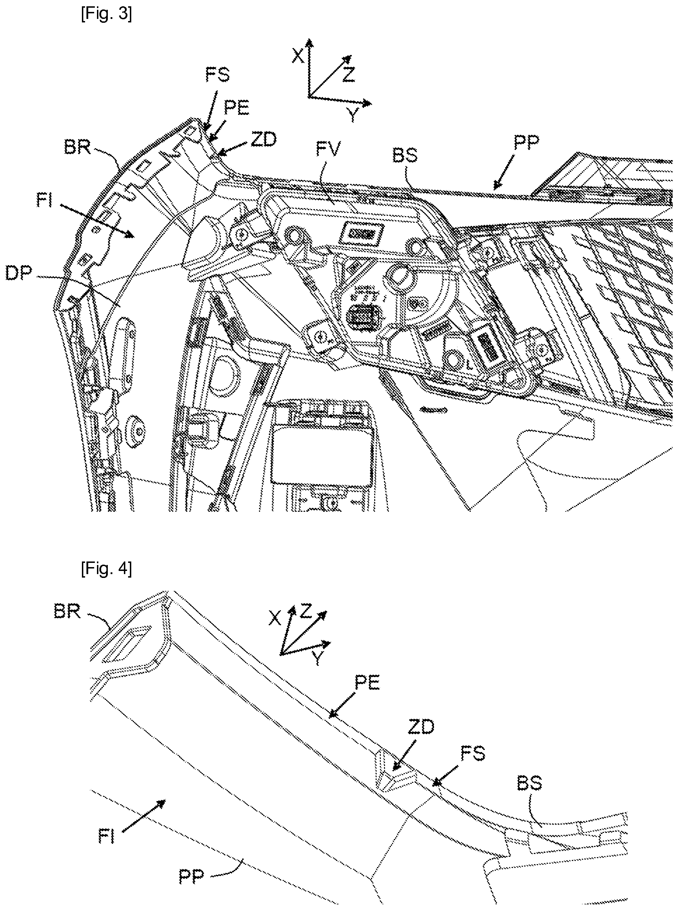

La peau de pare-chocs PP est destinée à faire partie d'un pare-chocs d'un véhicule (terrestre) qui comprend par ailleurs une armature de pare-chocs, une éventuelle traverse inférieure de pare-chocs, et une éventuelle doublure de pare-chocs DP. Comme illustré sur la figure 3, la doublure de pare-chocs DP est solidarisée fixement à la face interne FI de la peau de pare-chocs PP, laquelle est opposée à la face externe FE de cette dernière (PP) qui est orientée vers l'extérieur. On notera que la peau de pare-chocs PP est destinée à être solidarisée fixement à l'armature de pare-chocs et à l'éventuelle traverse inférieure de pare-chocs et à masquer notamment ces dernières.

Comme illustré partiellement sur les figures 1 et 2, la peau de pare-chocs PP comprend un bord supérieur BS qui est propre à être installé suivant la direction transversale Y du véhicule et a deux parties d'extrémité PE droite et gauche qui sont prolongées vers le bas par deux bords arrière BR.

Dans l'exemple illustré sur la figure 1 la partie gauche de la peau de pare-chocs PP intègre un feu (ou bloc optique) avant gauche FV et a une aile (de carrosserie) avant gauche AG qui est installée dans le prolongement de son bord arrière BR et un projecteur avant gauche PV qui est installé au-dessus de la partie latérale gauche de son bord supérieur BS. On notera que la partie droite de la peau de pare-chocs PP intègre un feu (ou bloc optique) avant droit et a une aile (de carrosserie) avant droite qui est installée dans le prolongement de son bord arrière et un projecteur avant droit qui est installé au-dessus de la partie latérale droite de son bord supérieur.

Le bord arrière BR gauche, respectivement droit, de la peau de pare-chocs PP est donc propre à être installé devant le bord avant BV de l'aile avant gauche AG, respectivement droite. Par exemple, et comme illustré non limitativement sur les figures 1 et 2, chaque partie d'extrémité PE peut être propre à s'étendre en direction du bord avant BV correspondant.

Comme illustré sur la figure 3, le feu avant gauche FV est solidarisé fixement à la face interne FI de la peau de pare-chocs PP et à la partie gauche de la doublure de pare-chocs DP. Le feu avant droit (non illustré) est solidarisé fixement à la face interne FI de la peau de pare-chocs PP et à la partie droite de la doublure de pare-chocs DP.

Comme illustré sur les figures 2 à 4, chaque partie d'extrémité PE du bord supérieur BS de la peau de pare-chocs PP comprend une zone ZD qui est agencée de manière à induire une déformation locale (et donc latérale) de la peau de pare-chocs PP suivant une direction prédéfinie, lorsque cette dernière (PP) subit un choc sensiblement frontal. Le mot « sensiblement » signifie ici parallèle à la direction longitudinale X à plus ou moins 20°.

Ainsi, lorsque la peau de pare-chocs PP subit un choc sensiblement frontal, elle se déforme latéralement de façon contrôlée suivant la direction prédéfinie, évitant ainsi totalement ou presque totalement à l'un au moins de ses bords arrière BR d'exercer une pression sur le bord avant BV de l'aile (ici avant) correspondante, même en présence de zones très rigides là où les feux avant droit et gauche FV sont intégrés. Cela permet avantageusement de réduire les coûts de réparation du véhicule, puisque seul le pare-chocs endommagé doit être remplacé.

On notera que lorsque la vitesse relative du véhicule par rapport à l'objet contacté dans un choc sensiblement frontal est supérieure à 20 km/h, au moins un bord arrière BR pourrait pousser l'aile correspondante. Mais, du fait de la déformation latérale contrôlée induite par la zone ZD voisine, cette poussée est très limitée et risque au plus d'induire une petite déformation de cette aile, sans risque que cette dernière exerce à son tour une pression sur la porte latérale située dans son prolongement. Cela permet d'éviter d'avoir à remplacer chaque porte latérale.

L'invention permet également de ne pas avoir à réaliser des zones de fusibilité au niveau des fixations des feux FV sur le pare-chocs et/ou des fixations du pare-chocs sur les ailes AG, et donc de réduire les coûts de fabrication des véhicules.

Chaque zone ZD est agencée de manière à induire une déformation latérale locale de la peau de pare-chocs PP suivant une direction prédéfinie qui est parallèle à la direction transversale Y, en cas de choc sensiblement frontal. Mais on pourrait envisager que chaque zone ZD soit agencée de manière à induire une déformation latérale locale de la peau de pare-chocs PP suivant une direction prédéfinie qui est parallèle à la direction verticale Z.

Comme illustré sur les figures 2 à 4, chaque zone ZD a peut avoir une épaisseur qui est inférieure à l'épaisseur locale de sa partie d'extrémité PE, de préférence du côté de la face interne FI. En d'autres termes, ce sont des amincissements locaux des parties d'extrémité PE qui définissent les zones ZD. Cela est particulièrement avantageux car les zones ZD ne sont pas visibles de l'extérieur lorsqu'elles sont réalisées du côté de la face interne FI, et leurs éventuelles imperfections (ou défauts d'aspect), de type déformation ou retassure, sont ici masqué(e)s par la présence juste au-dessus d'elles (ZD) des projecteurs avant PV.

Mais dans une variante de réalisation, on pourrait par exemple réaliser chaque zone ZD sous la forme de lignes d'affaiblissement comprenant des petits trous traversants.

Comme illustré sur les figures 2 à 4 chaque zone ZD a une forme générale en V. Dans ce cas, la réduction d'épaisseur fragilise la peau de pare-chocs PP, et la forme en « V » permet d'orienter la direction du pliage de la peau de pare-chocs PP. En effet, la peau de pare-chocs PP plie suivant au moins une zone ZD en V et prend du volume en latéral (suivant la direction transversale Y) au lieu d'avoir au moins un bord arrière BR qui recule vers l'arrière et donc vers l'aile voisine.

Par exemple, et comme illustré non limitativement et au moins partiellement sur les figures 2 à 4, chaque zone ZD peut être propre à s'étendre sensiblement suivant la direction verticale Z (du véhicule) avec la sous-partie la plus étroite du V placée à un niveau vertical qui est inférieur au niveau où est placée la sous-partie la plus large du V. En d'autres termes, la sous-partie la plus large de chaque zone ZD est située plus haut que la sous-partie la moins large de cette même zone ZD, et de préférence au niveau d'une face supérieure FS de sa partie d'extrémité PE.

## Revendications

1. Peau de pare-chocs (PP) propre à équiper un véhicule terrestre comportant deux ailes droite et gauche (AG) comportant chacune un bord avant (BV), ladite peau de pare-chocs (PP) comportant un bord supérieur (BS) propre à être installé suivant une direction transversale dudit véhicule et ayant deux parties d'extrémité (PE) droite et gauche prolongées vers le bas par deux bords arrière (BR) propres à être installés chacun devant un bord avant (BV) correspondant, **caractérisée en ce que** chaque partie d'extrémité (PE) comprend une zone (ZD) agencée de manière à induire une déformation locale de ladite peau de pare-chocs (PP) suivant une direction prédéfinie parallèle à ladite direction transversale, en cas de choc sensiblement frontal subi par cette dernière (PP), ladite zone (ZD) ayant une épaisseur qui est inférieure à une épaisseur locale de sa partie d'extrémité (PE) et une forme générale en V.

2. Peau de pare-chocs selon la revendication 1, **caractérisée en ce que** chaque zone (ZD) est propre à s'étendre sensiblement suivant une direction verticale dudit véhicule avec la sous-partie la plus étroite du V placée à un niveau vertical inférieur à un niveau où est placée la sous-partie la plus large du V.

3. Peau de pare-chocs selon l'une des revendications 1 à 2, **caractérisée en ce que** chaque partie d'extrémité (PE) est propre à s'étendre en direction dudit bord avant (BV) correspondant.

4. Pare-chocs destiné à équiper un véhicule terrestre comprenant deux ailes droite et gauche (AG) comportant chacune un bord avant (BV), **caractérisé en ce qu'**il comprend une peau de pare-chocs (PP) selon l'une des revendications précédentes.

5. Véhicule terrestre comprenant deux ailes droite et gauche (AG) comportant chacune un bord avant (BV), **caractérisé en ce qu'**il comprend en outre au moins un pare-chocs selon la revendication 4.

6. Véhicule terrestre selon la revendication 5, **caractérisé en ce qu'**il comprend une partie avant comportant ledit pare-chocs.

7. Véhicule terrestre selon la revendication 5 ou 6, **caractérisé en ce qu'**il est de type automobile.

## Patentansprüche

1. Stoßfängerhaut (PP), geeignet zur Ausrüstung eines Landfahrzeugs, mit zwei rechten und linken Flügeln (AG), die jeweils eine Vorderkante (BV) aufweisen, wobei die Stoßfängerhaut (PP) eine Oberkante (BS) aufweist, die geeignet ist, in einer Querrichtung des Fahrzeugs installiert zu werden, und zwei rechte und linke Endteile (PE) aufweist, die nach unten durch zwei hintere Kanten (BR) verlängert sind, die jeweils geeignet sind, vor einer entsprechenden Vorderkante (BV) installiert zu werden, **dadurch gekennzeichnet, dass** jeder Endteil (PE) einen Bereich (ZD) aufweist, der so angeordnet ist, dass er eine lokale Verformung der Stoßfängerhaut (PP) in einer vorbestimmten Richtung bewirkt Parallel zu dieser Querrichtung hat der Bereich (ZD) im Falle eines im Wesentlichen frontalen Aufpralls auf den letzteren (PP) eine Dicke, die geringer als eine lokale Dicke seines Endteils (PE) ist, und eine allgemeine V-förmige Form.

2. Stoßfängerhaut nach Anspruch 1, **dadurch gekennzeichnet, dass** jede Zone (ZD) sich im Wesentlichen in einer vertikalen Richtung des Fahrzeugs erstrecken kann, wobei der schmalste Teilabschnitt des V auf einem vertikalen Niveau angeordnet ist, das niedriger ist als ein Niveau, auf dem der breiteste Teilabschnitt des V angeordnet ist.

3. Stoßfängerhaut nach einem der Ansprüche 1 bis 2, **dadurch gekennzeichnet, dass** jeder Endabschnitt (PE) sich in Richtung der entsprechenden Vorderkante (BV) erstrecken kann.

4. Stoßfänger zur Ausrüstung eines Landfahrzeugs, das zwei rechte und linke Kotflügel (AG) umfasst, die jeweils eine Vorderkante (BV) aufweisen, **dadurch gekennzeichnet, dass** er eine Stoßfängerhaut (PP) nach einem der vorhergehenden Ansprüche umfasst.

5. Landfahrzeug mit zwei rechten und linken Flügeln (AG), die jeweils eine Vorderkante (BV) aufweisen, **dadurch gekennzeichnet, dass** es außerdem mindestens einen Stoßfänger nach Anspruch 4 aufweist.

6. Landfahrzeug nach Anspruch 5, **dadurch gekennzeichnet, dass** es einen vorderen Teil mit dem Stoßfänger aufweist.

7. Landfahrzeug nach Anspruch 5 oder 6, **dadurch gekennzeichnet, dass** es vom Typ Automobil ist.

## Claims

1. Bumper skin (PP) suitable for equipping a land vehicle comprising two right and left wings (AG) each comprising a front edge (BV), said bumper skin (PP) comprising an upper edge (BS) suitable for being installed along a transverse management of said vehicle and having two right and left end parts (PE) extended downwards by two rear edges (BR) each suitable for being installed in front of a corresponding front edge (BV), wherein each end part (PE) comprises a zone (ZD) arranged so as to induce a local deformation of said bumper skin (PP) according to a management predefined parallel to said transverse management, in the event of a substantially frontal impact to which the latter (PP) is subjected, said zone (ZD) having a thickness which is less than a local thickness of its end part (PE) and a general V-shape.

2. Bumper skin according to claim 1, wherein each zone (ZD) is adapted to extend substantially along a vertical management of said vehicle with the narrowest subpart of the V placed at a vertical level smaller than a level where the widest subpart of the V is placed.

3. Bumper skin according to one of Claims 1 to 2, **characterised in that** each end part (PE) is capable of extending at the management of said corresponding front edge (BV).

4. Bumpers intended to be fitted to a land vehicle comprising two right and left wings (AG) each comprising a front edge (BV), **characterised in that** it comprises a bumper skin (PP) according to one of the previous claims.

5. Land vehicle comprising two right and left wings (AG) each comprising a front edge (BV), **characterised in that** it further comprises at least one bumper according to claim 4.

6. Land vehicle according to claim 5, **characterised in that** it comprises a front part comprising said bumper.

7. Land vehicle according to claim 5 or 6, **characterised in that** it is of the automobile type.
